# EUROPEAN PATENT SPECIFICATION

(11) **EP 2 770 778 B1**
(45) Date of publication and mention of the grant of the patent: **01.08.2018**
(21) Application number: 12732018.2
(22) Date of filing: 04.01.2012
(51) Int. Cl.: H04W 36/08, H04W 36/30, H04W 12/04, H04W 28/18, H04W 92/20, H04L 29/06, H04W 12/02

(54) **METHOD, SYSTEM, AND ENB FOR ESTABLISHING SECURE X2 CHANNEL**
VERFAHREN, SYSTEM, UND ENB ZUR HERSTELLUNG EINES SICHEREN X2-KANALS
PROCÉDÉ, SYSTÈME ET eNB POUR ÉTABLIR UN CANAL X2 SÉCURISÉ

(43) Date of publication of application: 27.08.2014
(73) Proprietor: Huawei Technologies Co., Ltd., Longgang District Shenzhen, Guangdong 518129 (CN)
(72) Inventor: SONG, Zhuo, Shenzhen Guangdong 518129 (CN)
(74) Representative: Maiwald Patent- und Rechtsanwaltsgesellschaft mbH
(86) International application number: PCT/CN2012/070034
(87) International publication number: WO 2012/092858

(56) References cited:
- EP-A1- 2 093 975
- EP-A1- 2 127 415
- CN-A- 101 552 985
- CN-A- 101 686 513
- CN-A- 101 810 034
- CN-A- 101 909 297
- CN-A- 102 238 609
- CN-A- 102 256 383
- CN-A- 102 301 788
- NOKIA SIEMENS NETWORKS ET AL: "Enhancement of the IP address exchange mechanism for ANR purposes", 3GPP DRAFT; R3-102818 ANR_CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453625, [retrieved on 2010-10-02]
- KAUFMAN MICROSOFT P HOFFMAN VPN CONSORTIUM Y NIR CHECK POINT P ERONEN NOKIA C: "Internet Key Exchange Protocol: IKEv2; draft-ietf-ipsecme-ikev2bis-11.txt", INTERNET KEY EXCHANGE PROTOCOL: IKEV2; DRAFT-IETF-IPSECME-IKEV2BIS-11.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 11, 17 May 2010 (2010-05-17), pages 1-90, XP015068563, [retrieved on 2010-05-17]

## Description

### TECHNICAL FIELD

The present invention relates to the field of communications technologies, and in particular, to a method, a system and a base station for establishing an X2 security tunnel.

### BACKGROUND

A Long Term Evolution/System Architecture Evolution (Long Term Evolution/System Architecture Evolution, LTE/SAE) network system project is a largest new technical research and development project launched by the 3rd Generation Partnership Project (3rd Generation Partnership Project, 3GPP) in recent years. Such a technology, based on orthogonal frequency division multiplexing/frequency division multiple access (OFDM/FDMA), is considered as a mainstream technology for evolution from 3G to 4G, because it already has some features of "4G".

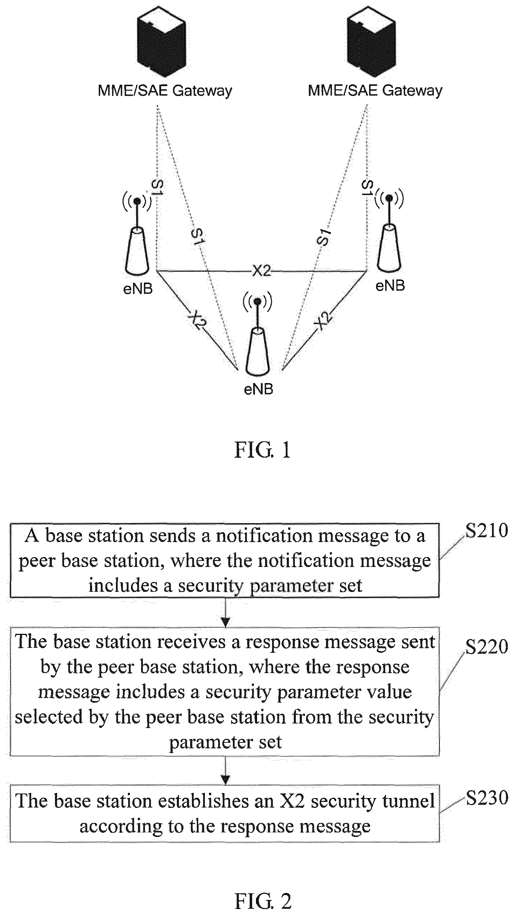

Refer to FIG. 1, which is a structural diagram of an LTE/SAE network system in the prior art. The LTE/SAE network system includes evolved base stations (eNB, eNodeB) and a mobility management entity/serving gateway (MME/SGW, Mobility Management Entity/Serving Gateway) managing these base stations. An S1 link is established between the MME/SGW and an eNB through an S1 interface, and an X2 link is established between two eNBs through an X2 interface.

Specifically, the S1 link provides a function of accessing radio resources in a radio access network, including a control plane function and a user plane function. A control plane interface (S1-MME) of the S1 link provides an application protocol between the eNB and the MME, and provides a signaling bearer function for transmitting an application protocol message. A user plane interface (S1-U) of the S1 link provides a user plane data transmission function between the eNB and the SGW.

The X2 link exists mainly to support a mobility management function for a terminal. For example, in scenarios such as missing a cell and adding a base station, an operator hopes that when a terminal is handed over from a cell of a source eNB to a cell of a target eNB, an X2 link between the eNBs can be established automatically to transmit handover control information and data information. Specifically, the source eNB and the target eNB can obtain, through S1 signaling between the eNB and the MME/SGW, user plane and signaling plane transmission information of each other to automatically establish the X2 link.

Currently, in a process of automatically establishing an X2 link, transmission information, such as user plane transmission information and signaling plane transmission information, is often transmitted in a plaintext manner. In other words, the transmission information is not encrypted and protected. This obviously does not meet a current requirement for communications security. Therefore, in an S1 application protocol, namely the 36.413 protocol (address: http://www.3gpp.org/ftp/Specs/latest/Rel-8/36_series/) in 3GPP LTE, information of an IP-Sec transport layer address of a peer base station is added to an auto-configuration message of an X2 transport network layer (which means an X2 TNL Configuration Info message may carry an IP-Sec Transport Layer Address). However, in practical application, many problems exist when only this parameter is used to establish a security tunnel between eNBs, always leading to a failure in establishing the security tunnel, and then plaintext transmission is performed directly.

The patent application EP 2127415 A1 discloses a method for secure and authenticated communications between base stations. Within TCP/IP protocol, a set of Internet Engineering Task Force (IETF) standardized processes called Internet Protocol Security (IPSec) is used for domain protection of IP header information. To determine whether authentication and confidentiality, as opposed to just authentication, is used, a security association (SA) is set up in IPSec. The SA consists of three parts: a specification of the security algorithms and other parameters, the IP destination address, and an identifier for AH or ESP. The SA is implemented through the Internet Key Exchange (IKE) Protocol. Before any authentication/integrity and confidentiality can be used in IPSec, cryptographic keys, algorithms and parameters have to be negotiated. The IKE protocol contains many protocols for the required negotiation, where initial exchanges between the base stations, an initiator (I) and an responder (R), for establishing the initial security association consist of two sets of request/response pairs. The first pair establishes cryptographic algorithm usage and performs a Diffie-Hellman exchange to arrive at a seed from which integrity and confidentiality keys are derived. The second pair uses the keys generated from the first exchange to authenticate the first set of messages, swap identities as well as certificates, and provide setup for follow-on child SAs. The first pair is: HDR*_{I}*, SA*_{I}*, g_{I}^{x}, N*_{I}* (from I to R) and HDR*_{R}*, SA*_{R}*, g_{R}^{y}, N*_{R}* (from R to I), where SA*_{I}* and SA*_{R}* are the security algorithm and parameter negotiation mechanisms, where the initiator proposes the set of choices from which the responder chooses.

The patent application EP 2093975 A1 discloses a system, in the system, nodes in different networks communicate with each other through security gateways in the different networks and a router connecting the different networks. And the nodes are capable of communicating with each other by IPSec through a connection between the security gateways in an IPSec tunnel mode. An IKE is used to negotiate encryption key and security information between IPSec host and security gateway. In a case where communications are performed between the nodes by the IPSec, a Security Association (SA) is established between the nodes by the IKE protocol. The node #1 establishes an ISAKMP SA with the opposite node #2 in phase 1. At that time, the SA is established bi-directionally and used to assure an IKE message itself. Subsequently, the node #1 establishes an IPSec SA and an IPCA (IPComp Association) with the opposite node #2 in phase 2. The IPSec SA is established for determining an algorithm, such as AH and ESP, for use in actual data communications.

The patent application CN 101909297 A discloses a method for a mutual authentication between access network devices. In the method, each access network device is configured a certificate, and a mutual authentication based on the certificate is performed between the access network devices by using Internet Key Exchange (IKE). After the mutual authentication between the access network devices succeeds, a secure connection is established between the access network devices to perform confidentiality protection or integrity protection or the confidentiality and integrity protection on transmitted data.

XP50453625 relates to the 3GPP standard document describing the information elements IE included into X2 Transport Network Layer TNL messages.

XP15068563 is the RFC draft relating to Internet Key Exchange Protocol IKEv2. Therefore, a technology for establishing an X2 security tunnel is urgently needed to solve a data security problem in the process of establishing an X2 link.

### SUMMARY

Accordingly, the following provides a method, a system and a base station for establishing an X2 security tunnel to solve an existing data security problem in a process of automatically establishing an X2 link.

According to one aspect, a method for establishing an X2 security tunnel is provided, where the method includes: sending, by a base station, a notification message to a peer base station, where the notification message includes a security parameter set; receiving a response message sent by the peer base station, where the response message includes a security parameter value selected by the peer base station from the security parameter set; and establishing an X2 security tunnel according to the response message, wherein the security parameter set comprises an IP-Sec parameter set and an IKE parameter set; wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter.

According to another aspect, a method for establishing an X2 security tunnel is provided, where the method includes: receiving, by a base station, a notification message sent by a peer base station, where the notification message includes a security parameter set; selecting a security parameter value supported by the base station from the security parameter set; and sending a response message to the peer base station, where the response message includes the selected security parameter value, wherein the security parameter set comprises an IP-Sec parameter set and an IKE parameter set; wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter.

According to another aspect, a base station is provided, where the base station includes: a storing module, configured to store a security parameter set; an interface module, configured to send a notification message to a peer base station, and receive a response message sent by the peer base station, where the notification message includes the security parameter set, and the response message includes a security parameter value selected by the peer base station from the security parameter set; and a tunnel establishing module, configured to establish an X2 security tunnel according to the response message, wherein the security parameter set comprises an IP-Sec parameter set and an IKE parameter set; wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter.

According to another aspect, a base station is provided, where the base station includes: an interface module, a storing unit, and a controlling unit, where the storing unit is configured to store a security parameter set and a program code; and the controlling unit is configured to load the program code to perform following operations: generating a notification message, where the notification message includes the security parameter set; sending the notification message to a peer base station through the interface module; receiving, through the interface module, a response message sent by the peer base station, where the response message includes a security parameter value selected by the peer base station from the security parameter set; and establishing an X2 security tunnel according to the response message, wherein the security parameter set comprises an IP-Sec parameter set and an IKE parameter set; wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter.

According to another aspect, a base station is provided, where the base station includes: a storing module, configured to store a security parameter value supported by the base station; an interface module, configured to receive a notification message sent by a peer base station, where the notification message includes a security parameter set; and a selecting module, configured to select a security parameter value supported by the base station from the security parameter set; and the interface module is configured to send a response message to the peer base station, where the response message includes the selected security parameter value, wherein the security parameter set comprises an IP-Sec parameter set and an IKE parameter set; wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter.

According to another aspect, a base station is provided, where the base station includes: an interface module, a storing unit, and a controlling unit, where the storing unit is configured to store a program code and a security parameter value supported by the base station; and the controlling unit is configured to load the program code to perform the following operations: receiving, through the interface module, a notification message sent by a peer base station, where the notification message includes a security parameter set; selecting a security parameter value supported by the base station from the security parameter set; generating a response message, where the response message includes the selected security parameter value; and sending the response message to the peer base station through the interface module, wherein the security parameter set comprises an IP-Sec parameter set and an IKE parameter set; wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter.

According to another aspect, a system for establishing an X2 security tunnel is provided, where the system includes: a first base station, a second base station and a manager for managing the first base station and the second base station, where a structure of the first base station is the same as that of either of the first two of the foregoing base stations, and a structure of the second base station is the same as that of either of the last two of the foregoing base stations.

As can be seen, when a user terminal is handed over from a cell covered by a base station to a cell covered by another base station, while sending a notification message to the another base station, the base station sends a security parameter set so that the another base station selects a security parameter value supported by the another base station, thereby sparing multiple times of negotiation, reducing problems caused by the negotiation, such as a delay or a failure to establish a security tunnel, and establishing an X2 security tunnel within a time tolerable for a communications handover.

### BRIEF DESCRIPTION OF DRAWINGS

FIG. 1 is a structural diagram of an existing LTE/SAE network system;
FIG. 2 is a flowchart of a method for establishing an X2 security tunnel according to Embodiment 1 of the present invention;
FIG. 3 is a flowchart of a method for establishing an X2 security tunnel according to Embodiment 1 of the present invention;
FIG. 4 is a block diagram of implementation of a base station according to Embodiment 2 of the present invention;
FIG. 5 is another block diagram of implementation of a base station according to Embodiment 2 of the present invention;
FIG. 6 is a block diagram of implementation of a base station according to Embodiment 3 of the present invention; and
FIG. 7 is another block diagram of implementation of a base station according to Embodiment 3 of the present invention;

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

As can be seen from the background, although the existing 36.413 protocol shows a security mechanism based on the Internet Protocol Security Protocol (IP-Sec), it is found by research that this mechanism is not complete, causing that IP-Sec protection cannot be implemented in a process of establishing an X2 link. It is found by research that if merely information of an IP-Sec transport layer address of a peer base station is added to an auto-configuration message of an X2 transport network layer (which means an X2 TNL Configuration Info message carries IP-Sec Transport Layer Address information), negotiation information is incomplete. In this case, multiple parameters, such as a negotiation mode, a protocol version, an authentication manner, an authentication algorithm, an encryption algorithm, an encryption mode, and a transmission mode, are needed to be further negotiated. Inconsistency of any of these parameters will result in a negotiation failure. Even all of these parameters are successfully negotiated, the negotiation will still result in a very long delay, because each time of IP-Sec negotiation requires about 10 seconds, and negotiate for so many parameters will take several minutes or even longer. However, a tolerable time meeting an existing communications handover requirement is 15 seconds to 20 seconds. Therefore, the manner of making an attempt by using the parameters is not feasible. As can be seen, security information carried by the existing 36.413 protocol cannot meet a requirement for establishing a security transmission tunnel during a handover, and a function of the 36.413 protocol is incomplete.

Accordingly, two ways are provided: 1) configure, according to an agreement reached in advance, a minimum parameter set, and send the minimum parameter set, along with an IP-Sec Transport Layer Address that can be carried, to a peer side during a communications handover, so that a security tunnel can be established without making multiple attempts because the agreement about the parameters has been reached in advance; 2) extend the existing 36.413 protocol, use all possible choices for parameters that need to be negotiated to establish a minimum parameter set, and send the minimum parameter set, along with an IP-Sec Transport Layer Address that can be carried, to a peer side during a communications handover, so that the peer side can perform selection according to the minimum parameter set provided by a source side to achieve the negotiation and establish a security tunnel without making multiple attempts.

As can be seen, in the two solutions, a parameter set that can assist a successful negotiation is established, and the details are described as follows with reference to Embodiment 1 and the accompanying drawings:

### Embodiment 1

Refer to FIG. 2, which is a flowchart of a method for establishing an X2 security tunnel according to Embodiment 1 of the present invention. As shown in FIG. 2, the method includes the following steps:
S210: A base station sends a notification message to a peer base station, where the notification message includes a security parameter set.
S220: The base station receives a response message sent by the peer base station, where the response message includes a security parameter value selected by the peer base station from the security parameter set.
S230: The base station establishes an X2 security tunnel according to the response message.

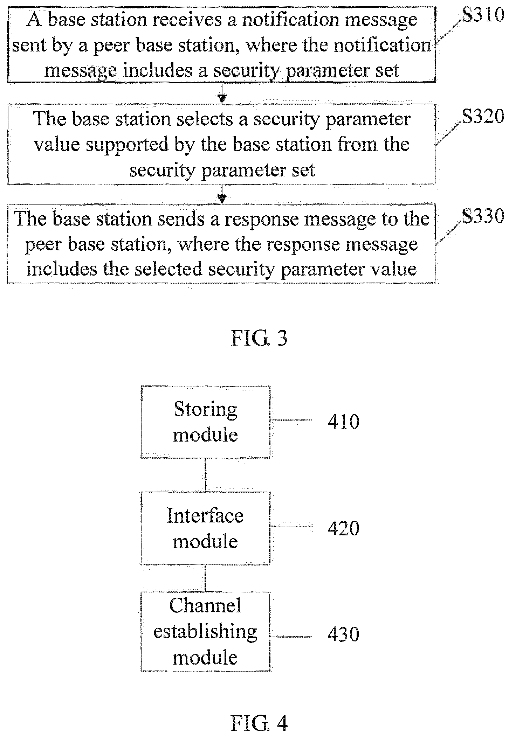

Correspondingly, when receiving the notification message, the peer base station in the foregoing steps responds to the notification message. A specific response process is shown in FIG. 3, and includes the following steps:
S310: A base station receives a notification message sent by a peer base station, where the notification message includes a security parameter set.
S320: The base station selects a security parameter value supported by the base station from the security parameter set.
S330: The base station sends a response message to the peer base station, where the response message includes the selected security parameter value.

It should be noted that the base station in FIG. 2 and the base station in FIG. 3 are peer base stations of each other. To avoid confusion in the following description, it is assumed that the base station and the peer base station in the following description of Embodiment 1 correspond to those in FIG. 2.

The following describes in detail the security parameter sets constructed in the foregoing two ways:
Way 1: The security parameter set includes at least one default parameter.

Specifically, if a supplier of the base station and a supplier of the peer base station can agree on selection of a security parameter and a value of the security parameter in advance, the agreed value of the security parameter may be configured as a default parameter. Sometimes, for different peer base stations, default parameters may be different, and therefore a security parameter set may be established to hold all agreed default parameters.

In this way, when the base station sends the notification message to the peer base station, the security parameter set can be sent together to the peer base station, so that the peer base station can perform selection according to its own condition, thereby a negotiation can be completed by one time and a security tunnel between the base stations can be established according to a negotiation result.

Certainly, in this manner, because agreement on the security parameter is reached in advance, the security parameter set may not be sent, but a default security parameter set is configured into the base station. When a handover is performed, an existing parameter is carried according to a standard protocol, and then a security tunnel is established by directly using a security parameter that is locally configured in advance.

For a same equipment supplier, such agreement can be easily reached. This way is applicable to establishing a security tunnel between base stations in a local area. However, when different equipment suppliers are involved, negotiation normally requires assistance from an operator or a security parameter specified by the operator, which brings a waste of substantial human costs, is not conducive to expansion, and is not applicable in a wide area. Therefore, the second way is put forward as follows:
Way 2: Extend the 36.413 protocol.

Specifically, on a basis that a notification message of a communications handover includes an IP-Sec Transport Layer Address, least IKE parameters are supplemented to automatically generate, after IKE is successfully established, a key required for IP-Sec; and a minimum parameter set required for IP-Sec is supplemented, so as to achieve capability of establishing an X2 security tunnel under IP-Sec protection within a time delay (15s to 20s) tolerable for a handover when the handover occurs.

It can be seen that in this embodiment, the security parameter set includes an IP-Sec parameter set and an IKE parameter set. Establishment of the two parameter sets needs to ensure a principle that a negotiation can be successfully completed by one time with support of a minimum parameter set. The following established IKE parameter set and IP-Sec parameter set can meet this principle, and reduce a probability of a negotiation failure to an almost negligible level.

Specifically, the IKE parameter set includes: IKE protocol version, IKE exchange modeIKE; IKE authentication mode; IKE encryption algorithm; IKE authentication algorithm; Diffie-Hellman group of the IKE; Pseudo-random Function; and algorithm used in IKEv2. The IP-Sec parameter set includes: IPSec negotiation perfect forward secrecy (PFS); Encapsulation mode of an IPSec; IPSec transform; AH Authentication Algorithm; ESP Authentication Algorithm; and ESP Encryption Algorithm. In the parameter sets, information of all supported values of each parameter given above is further listed.

The following explains a meaning of each parameter given above:
IKE protocol version: This parameter indicates a version of an IKE protocol. Currently, the IKE protocol includes two versions, V1 and V2. The two versions are not compatible with each other. For example, if a source base station uses the version V1 and a target base station uses the version V2, IKE negotiation fails. Therefore, this parameter needs to be provided. In comparison with the version VI, the version V2 is improved in terms of supported authentication and negation algorithms, and its process is also different.

IKE exchange modeIKE: This parameter indicates a negotiation mode of the IKE, which means some specific processes for negotiating a key. Different processes are not compatible with each other, and therefore this parameter needs to be specified. In master mode, key exchange information is separated from identity and authentication information. This separation protects the identity information and provides higher security. In aggressive mode, protection with identity authentication is lacked, but the aggressive mode can meet some specific network environment requirements. When an authentication method of an IKE security proposal is to pre-share the key, the master mode does not support name authentication but the aggressive mode does.

IKE authentication mode: This parameter indicates an authentication manner selected by the IKE security proposal, which means a manner in which both negotiating sides authenticate an identity of each other in an IKE phase. The manner is generally a pre-shared key authentication manner, a digital certificate authentication manner, or an Extensible Authentication Protocol (EAP) manner. Different manners are not compatible with each other. Therefore, this parameter also needs to be specified. In the pre-shared key manner, information is transmitted on a network, and transmitting a pre-shared key on the network in an unencrypted manner is inappropriate and the pre-shared key may be revealed. However, a person skilled in the art may determine whether to select this pre-shared key manner according to a network condition. If this manner is selected, another parameter, Pre-shared Key, is involved. If the pre-shared key manner is selected for authentication, the pre-shared key needs to be specified in advance, and the local side and the peer side need to have the same pre-shared key. It can be seen that the parameter, Pre-shared Key, may selectively appear in the parameter set.

IKE encryption algorithm: This parameter indicates an encryption algorithm used during communication in the IKE phase. IKE is used for generating a key for IPSEC. A manner of generating the key is that the local side and the peer side each generate a key by using a mathematical algorithm with materials, where the materials are exchanged by the local side and the peer side to generate the keys. The keys are generated by the local side and the peer side by using the materials and are not transmitted on a network. However, the materials are transmitted in an encrypted manner. Generally the encrypted manner may include DES, 3DES, AES128, AES192, or AES256, and different manners are not compatible with each other. Therefore, this parameter also needs to be specified.

IKE authentication algorithm: This parameter indicates an algorithm which is used for the local side and the peer side to identify an identity of each other in the IKE phase. Generally the algorithm includes MD5, SHA1, AES_XCBC_96, or the like. Different algorithms are not compatible with each other, and only when algorithms of the local side and the peer side are consistent, negotiation may be successfully performed.

Diffie-Hellman group of the IKE: A core technology of the IKE is a DH (Diffie-Hellman) exchange technology. In the DH exchange technology, private information is calculated based on public information. Complexity of calculation to crack the DH exchange technology is mathematically proven to be very high, and currently the cracking is impossible. In the DH technology different encryption lengths can be specified. Different lengths are not compatible with each other. Therefore, a specific DH group of a DH algorithm used by the local side also needs to be consistent with that used by the peer side.

Pseudo-random Function (PRF) algorithm used in IKEv2: This parameter indicates a PRF (Pseudo-random Function) algorithm of IKEv2. The PRF algorithm is used to generate materials required for IKE authentication and encryption. An algorithm of the local side also needs to be consistent with an algorithm of the peer side.

IP-Sec negotiation perfect forward secrecy (PFS): This parameter indicates a value of perfect forward secrecy (PFS). With PFS, a key in a second phase of IP-Sec is not derived from a key in a first phase, and the keys in the two phases of IP-Sec are independent of each other. PFS requires that, for one key, only data that the key protects can be accessed; an element used to generate the key should change each time and cannot be used to generate another key; and cracking of one key does not affect security of another key. When IP-Sec initiates negotiation by using this security policy, a PFS exchange is performed. If PFS is specified for the local side, the peer side needs to perform a PFS exchange when initiating negotiation. DH groups specified by the local side and the peer side need to be consistent with each other; otherwise, the negotiation fails. A 1024-bit Diffie-Hellman group (Dh-Group2) is more secure than a 768-bit Diffie-Hellman group (Dh-Group1), but requires a longer calculation time.

Encapsulation mode of an IP-Sec: This parameter indicates an encapsulation mode, for which a tunnel mode or a transmission mode can be selected. In the transmission mode, only a data part is encrypted; for the tunnel mode, the IP-Sec protects a whole IP packet and a new IP header is added in front of an original IP packet, where a source address and a target address of the new IP header are IP addresses of two endpoints of a security tunnel, respectively. The transmission mode is generally used for end-to-end IP-Sec protection. The tunnel mode is used not only for the end-to-end IP-Sec protection, but also for protection for a certain segment in a tunnel.

IP-Sec transform: This parameter indicates an authentication and encryption protocol used by an IP-Sec protocol, and the authentication and encryption protocol may be an AH protocol, an ESP protocol, or a combination of the AH and ESP protocols (that means, the two protocols may be used together). The authentication and encryption protocols used by the local side and the peer side need to be consistent with each other; otherwise, the negotiation fails.

AH Authentication Algorithm: AH can only be used for authentication. Authentication algorithms used by the local side and the peer side need to be consistent; otherwise, the negotiation fails.

ESP Authentication Algorithm: This parameter indicates an algorithm used by an ESP authentication protocol, and the algorithms used by the local side and the peer side need to be consistent with each other.

ESP Encryption Algorithm: This parameter indicates an algorithm used by an ESP encryption protocol, and the algorithms used by the local side and the peer side need to be consistent with each other.

According to the 36.413 protocol, the notification message is a first eNB configuration transfer message (eNB Configuration Transfer message). Correspondingly, the response message is a second eNB configuration transfer message (eNB Configuration Transfer message). In addition, an eNB Configuration Transfer message includes an X2 transport network layer configuration message (X2 TNL Configuration Info). In this embodiment, the minimum parameter set including the supplemented IKE parameters and IPSEC parameters is put into the X2 TNL Configuration Info, and is sent, together with the existing parameter of IP-Sec Transport Layer Address, to the peer base station during the communications handover. In this case, the X2 TNL Configuration Info is showed in Table 1.

It should be noted that the notification message is an eNB Configuration Transfer message, and the security parameter set lies in the X2 TNL Configuration Info. However, this is not limited at all in the present invention. The security parameter set may be sent independently from the eNB Configuration Transfer message or the X2 TNL Configuration Info; in addition, the eNB Configuration Transfer message or the X2 TNL Configuration Info may still be used to send the security parameter set, but parameters in the security parameter set are sent in batches, for example, one, two, three, or more parameters are carried each time the X2 TNL Configuration Info is sent, till the negotiation is complete. However, the foregoing manners increase a time delay, and therefore, the security parameter set is preferably added to the X2 TNL Configuration Info message, so as to achieve the following effect:
Firstly, an existing standard is supplemented, and a required parameter is extended. Secondly, consistency of the parameters is achieved by using a process of an existing protocol standard.

In addition, the notification message may further carry some handover-related radio parameters besides the security parameter set, and the parameters other than the security parameter set in the notification message are not limited in the present invention.

As can be seen, while sending a notification message to a peer base station, a base station sends a security parameter set so that the peer base station selects a security parameter value supported by the peer base station, thereby sparing multiple times of negotiation, reducing problems caused by the negotiation, such as a delay or a failure to establish a security tunnel, and establishing an X2 security tunnel within a time tolerable for a communications handover.

The communications handover refers to a process of an inter-base-station communications handover, and specifically refers to a process of handing over a user terminal from a cell covered by the base station to a cell covered by the peer base station. The foregoing process of establishing an X2 security tunnel may be applied to the process of the inter-base-station communications handover, where an X2 link is not yet established between the base station and the peer base station, so that a security mechanism is automatically added to implement security transmission of signaling plane data, service plane data, management plane data and the like of the base station.

Because the X2 link is not established, the notification message and the response message obviously cannot be transmitted directly between the two base stations. Therefore, an MME is needed for performing transfer. That means, the base station sends the notification message and receives the response message through an S1 interface of the base station; and the peer base station also receives the notification message and sends the response message through an S1 interface of the peer base station.

It should be noted that in step S230, establishment of an X2 tunnel mainly relies on configuration information exchange between the base station and the peer base station. That means, the notification message includes not only the security parameter set, but also information of multiple addresses needed for establishing an X2 link, such as X2 Transport Layer Addresses, X2 Extended Transport Layer Addresses, and GTP Transport Layer Addresses. After the base station and the peer base station acquire the information of each other, the X2 tunnel can be automatically established according to the information of these addresses. Because this is a technology known by a person skilled in the art, no further details are provided herein. Likewise, in the foregoing second solution, because the IKE security parameter set and the IP-Sec security parameter set added in the notification message can start a process of automatic negotiation and security parameter selection during the tunnel establishment, data transmission under IP-Sec protection is ultimately implemented according to the selected security parameter value, thereby implementing the establishment of a security tunnel. As can be seen, in the process of establishing the security tunnel, information exchange between the base station and the peer base station is important. The following describes the exchange process with reference to the 36.413 protocol, the following description is merely brief description, and reference may be made to the protocol for a detailed process.

Refer to the 36.413 protocol. The information exchange between the base station and the peer base station is implemented mainly by the following two processes:
Process 1: eNB configuration transfer, which corresponds to chapter 8.15 in the protocol, is mainly used to transfer radio access network configuration information (RAN configuration information) from a base station to a mobility management entity (MME).
Process 2: MME configuration transfer, which corresponds to chapter 8.16 in the protocol, is mainly used to transfer RAN configuration information from the MME to a base station.

Specifically, Process 1 is first performed between a source base station and the MME: The source base station sends a first eNB configuration transfer message (eNB configuration transfer message) to the MME. The MME receives the first eNB configuration transfer message, transforms it into an MME configuration transfer message (MME configuration transfer message), and obtains address information of a target base station from the message. Then, Process 2 is performed between the MME and the target base station according to the address information of the target base station: The MME configuration transfer message is sent to the target base station. After receiving the MME configuration transfer message, the target base station obtains address information of the source base station from the message, obtains a security parameter set from the first eNB configuration transfer message, selects a security parameter value supported by the target base station, and constructs a second eNB configuration transfer message (eNB configuration transfer message) by using the selected security parameter value and the address information of the target base station. Then, Process 1 is performed between the target base station and the MME: The target base station sends the second eNB configuration transfer message to the MME. Next, the MME transforms the second eNB configuration transfer message into an MME configuration transfer message, and sends the MME configuration transfer message to the source base station according to Process 2.

### Embodiment 2

Refer to FIG. 4, which is a block diagram of implementation of a base station according to Embodiment 2 of the present invention. As shown in FIG. 4, the base station includes a storing module 410, an interface module 420, and a tunnel establishing module 430. The storing module 410 is configured to store a security parameter set; the interface module 420 is configured to send a notification message to a peer base station, where the notification message includes the security parameter set; the interface module 420 is further configured to receive a response message sent by the peer base station, where the response message includes a security parameter value selected by the peer base station from the security parameter set; and the tunnel establishing module 430 is configured to establish an X2 security tunnel according to the response message.

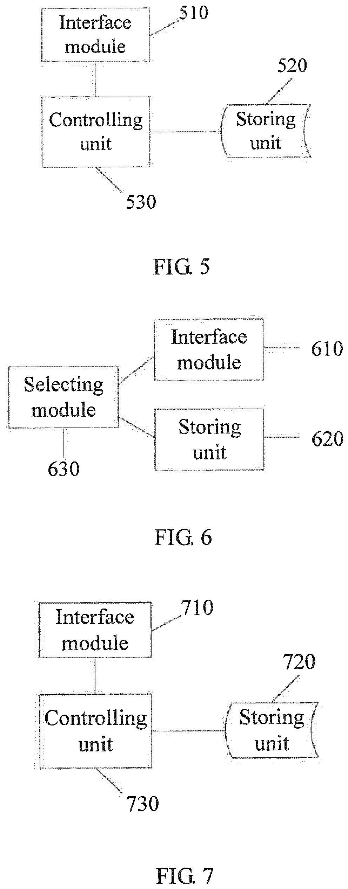

Refer to FIG. 5, which is another block diagram of implementation of a base station according to Embodiment 2 of the present invention. As shown in FIG. 5, the base station includes an interface module 510, a storing module 520, and a controlling unit 530, where the storing unit 520 stores a security parameter set and a program code, and the controlling unit 530 loads the program code to perform the following operations:
generating a notification message, where the notification message includes the security parameter set;
sending the notification message to a peer base station through the interface module 510;
receiving, through the interface module 510, a response message sent by the peer base station, where the response message includes a security parameter value selected by the peer base station from the security parameter set; and
establishing an X2 security tunnel according to the response message.

It should be known by a person skilled in the art that the program code may be stored in a computer readable storage medium, and the storage medium is, for example, a ROM/RAM, a magnetic disk, an optical disc, or the like.

As can be seen, while sending a notification message to the peer base station, the base station sends a security parameter set so that the peer base station selects a security parameter value supported by the peer base station, thereby sparing multiple times of negotiation, reducing problems caused by the negotiation, such as a delay or a failure to establish a security tunnel, and establishing an X2 security tunnel within a time tolerable for a communications handover.

The communications handover refers to a process of an inter-base-station communications handover, and specifically refers to a process of handing over a user terminal from a cell covered by the base station to a cell covered by the peer base station. The foregoing base station may be used as a source base station in the process of the inter-base-station communications handover, where an X2 link is not yet established, so that a security mechanism is automatically added to implement security transmission of signaling plane data, service plane data, management plane data, and the like of the base station.

Because the X2 link is not established, the notification message and the response message obviously cannot be transmitted directly between the two base stations, and therefore an MME is needed for performing transfer. That means, the interface module is an S1 interface module.

Same as Embodiment 1, in an exemplary implementation manner, the security parameter set may include an IP-Sec parameter set and an IKE parameter set. Specifically, the IP-Sec parameter set includes: IPSec negotiation perfect forward secrecy; Encapsulation mode of an IPSec; IPSec transform; AH Authentication Algorithm; ESP Authentication Algorithm; and ESP Encryption Algorithm and all values supported by each parameter. The IKE parameter set includes: IKE protocol version; IKE exchange modeIKE; IKE authentication mode; IKE encryption algorithm; IKE authentication algorithm; Diffie-Hellman group of the IKE; Pseudo-random Function; and algorithm used in IKEv2, and all values supported by each parameter.

In another implementation manner, the security parameter set includes at least one default parameter.

Corresponding to the 36.413 protocol, the notification message is a first eNB configuration transfer message. In addition, the first eNB configuration transfer message includes an X2 transport network layer configuration message, and the security parameter set lies in the X2 transport network layer configuration message. The response message is a second eNB configuration transfer message. Same as Embodiment 1, this is not limited at all in the present invention. The security parameter set may be sent independently from an eNB Configuration Transfer message or X2 TNL Configuration Info, but this increases a time delay. Therefore, the security parameter set is preferably added to the X2 TNL Configuration Info message, so as to achieve the following effect: Firstly, an existing standard is supplemented, and a required parameter is extended. Secondly, consistency of the parameters is achieved by using a process of an existing protocol standard.

### Embodiment 3

Refer to FIG. 6, which is a block diagram of implementation of a base station according to Embodiment 3 of the present invention. As shown in FIG. 6, the base station includes a storing module 610, an interface module 620, and a selecting module 630. The storing module 610 is configured to store a security parameter value supported by the base station; the interface module 620 is configured to receive a notification message sent by a peer base station, where the notification message includes a security parameter set; the selecting module 630 is configured to select a security parameter value supported by the base station from the security parameter set; and the interface module 620 is configured to send a response message to the peer base station, where the response message includes the selected security parameter value.

Refer to FIG. 7, which is another block diagram of implementation of a base station according to Embodiment 3 of the present invention. As shown in FIG. 7, the base station includes an interface module 710, a storing unit 720, and a controlling unit 730, where the storing unit 720 stores a program code and a security parameter value supported by the base station, and the controlling unit 730 loads the program code to perform the following operations:
receiving, through the interface module 710, a notification message sent by a peer base station, where the notification message includes a security parameter set;
selecting a security parameter value supported by the base station from the security parameter set;
generating a response message, where the response message includes the selected security parameter value; and
sending the response message to the peer base station through the interface module 710.

It should be known by a person skilled in the art that the program code may be stored in a computer readable storage medium, and the storage medium is, for example, a ROM/RAM, a magnetic disk, an optical disc, or the like.

As can be seen, while receiving a notification message sent by the peer base station, the base station receives a security parameter set so that the base station selects a security parameter value supported by the base station, thereby sparing multiple times of negotiation, reducing problems caused by the negotiation, such as a delay or a failure to establish a security tunnel, and establishing an X2 security tunnel within a time tolerable for a communications handover.

The communications handover refers to a process of an inter-base-station communications handover, and specifically refers to a process of handing over a user terminal from a cell covered by the peer base station to a cell covered by the base station. The foregoing base station may be used as a target base station in the process of the inter-base-station communications handover, where an X2 link is not yet established, so that a security mechanism is automatically added to implement security transmission of signaling plane data, service plane data, management plane data, and the like of the base station.

Because the X2 link is not established, the notification message and the response message obviously cannot be transmitted directly between the two base stations, and therefore an MME is needed for performing transfer. That means, the interface module is an S1 interface module.

Same as Embodiment 1, in an exemplary implementation manner, the security parameter set may include an IP-Sec parameter set and an IKE parameter set. Specifically, the IP-Sec parameter set includes: IPSec negotiation perfect forward secrecy; Encapsulation mode of an IPSec; IPSec transform; AH Authentication Algorithm; ESP Authentication Algorithm; and ESP Encryption Algorithm and all values supported by each parameter. The IKE parameter set includes: IKE protocol version; IKE exchange modeIKE; IKE authentication mode; IKE encryption algorithm; IKE authentication algorithm; Diffie-Hellman group of the IKE; Pseudo-random Function; and algorithm used in IKEv2, and all values supported by each parameter.

In another implementation manner, the security parameter set includes at least one default parameter.

Corresponding to the 36.413 protocol, the notification message is a first eNB configuration transfer message. In addition, the first eNB configuration transfer message includes an X2 transport network layer configuration message, and the security parameter set lies in the X2 transport network layer configuration message. The response message is a second eNB configuration transfer message. Same as Embodiment 1, this is not limited at all in the present invention. The security parameter set may be sent independently from an eNB Configuration Transfer message or X2 TNL Configuration Info, but this increases a time delay. Therefore, the security parameter set is preferably added to the X2 TNL Configuration Info message, so as to achieve the following effect: Firstly, an existing standard is supplemented, and a required parameter is extended. Secondly, consistency of the parameters is achieved by using a process of an existing protocol standard.

### Embodiment 4

The base stations in Embodiment 2 and Embodiment 3 may be used as a source base station and a target base station, respectively, in an inter-base-station communications handover. When a user terminal is handed over from a cell covered by the source base station to a cell covered by the target base station, while sending a notification message to the target base station, the source base station sends a security parameter set so that the target base station selects a security parameter value supported by the target base station, thereby sparing multiple times of negotiation, reducing problems caused by the negotiation, such as a delay or a failure to establish a security tunnel, and establishing an X2 security tunnel within a time tolerable for the communications handover. In this way, a system for establishing an X2 security tunnel is formed. Refer to FIG. 1. As can be seen from the figure, the system further includes a manager for managing the source base station and the target base station, where the manager is generally an MME, and the present invention does not limit whether the source base station and the target base station are managed by a same MME. That means, the source base station and the target base station may be base stations within a same MME, or may be base stations within different MMEs.

To conclude, when an inter-base-station tunnel handover is performed by using IP-Sec Transport Layer Address information carried in an existing 36.413 protocol, problems, such as a link establishment timeout and a handover failure, are often caused by a parameter attempt. According to the foregoing embodiments, a security parameter set is provided, where the security parameter set may be a default parameter set or a minimum extended supplement parameter set for supplementing the 36.413 protocol. By using the security parameter set, a negotiation can be completed by one time and an X2 security tunnel can be established. In particular, after the 36.413 is supplemented, a process of automatic negotiation and parameter selection may be started during tunnel establishment, thereby implementing data transmission under the protection of IP-Sec according to a selected security parameter value, and implementing establishment of a secure channel.

The foregoing descriptions are merely exemplary embodiments of the present invention. It should be noted that a person of ordinary skill in the part may make certain improvements and modifications without departing from the principle of the present invention and such improvements and modifications should fall within the protection scope of the present invention.

**Table 1 X2 TNL Configuration Info**

| **IE/Group Name** | **Presence** | **Range** | **IE type and reference** | **Semantics description** |
|---|---|---|---|---|
| eNB X2 Transport Layer Addresses | | 1 to <maxnoofeNB X2TLAs> | | |
| >Transport Layer Address | M | | 9.2.2.1 | Transport Layer Addresses for X2 SCTP end-point. |
| eNB X2 Extended Transport Layer Addresses | | 0 to <maxnoofeNB X2ExtTLAs> | | |
| >IP-Sec Transport Layer Address | O | | 9.2.2.1 | Transport Layer Addresses for IP-Sec end-point |
| >IKE protocol version | | | | Protocol version for X2 IKE end-point |
| >IKE exchange mode | | | | Exchange mode (Main Mode or Aggressive Mode) for X2 IKE end-point. Only when IKE protocol version is IKEV1, need this parameter |
| >IKE authentication mode | | | | Authentication mode used in the IKE proposal for X2 IKE end-point |
| >Pre-shared Key | | | | IKE authentication mode is Pre-shared key method, need this parameter. The two negotiation X2 ends must be configured with the same authenticator. |
| >IKE encryption algorithm | | | | Encryption algorithm for X2 IKE end-point |
| >IKE authentication algorithm | | | | Authentication algorithm for X2 IKE end-point |
| >Diffie-Hellman (DH) group of the IKE | | | | Diffie-Hellman (DH) group of the IKE |
| >Pseudo-random Function (PRF) algorithm used in IKEv2 | | | | IKE protocol version is IKEV2 need this parameter |
| >IPSec negotiation perfect forward secrecy(PFS) | | | | Perfect forward secrecy for IP-Sec end-point |
| >Encapsulation mode of an IPSec | | | | Encapsulation mode for IP-Sec end-point. Can be TUNNEL or TRANSPORT mode |
| >IPSec transform | | | | Security protocol for IP-Sec end-point. The value can be AH Protocol, ESP or Protocol, AH/ESP Protocol |
| >AH Authentication Algorithm | | | | AH Authentication Algorithm for IP-Sec end-point. |
| >ESP Authentication Algorithm | | | | ESP Authentication Algorithm for IP-Sec end-point. |
| >ESP Encryption Algorithm | | | | ESP Encryption Algorithm for IP-Sec end-point. |
| >eNB GTP Transport Layer Addresses | | 0 to <maxnoofeNB X2GTPTLAs> | | |
| >>GTP Transport Layer Address | M | | 9.2.2.1 | GTP Transport Layer Addresses for GTP end-points (used for data forwarding over X2). |

## Claims

1. A method for establishing an X2 security tunnel, comprising:
sending (S210), by a base station, a notification message to a peer base station, wherein the notification message comprises a security parameter set;
receiving (S220) a response message sent by the peer base station, wherein the response message comprises a security parameter value selected by the peer base station from the security parameter set; and
establishing (S230) an X2 security tunnel according to the response message,
wherein the method is **characterized in that**:
the security parameter set comprises an IP-Sec parameter set and an IKE parameter set;
wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and
the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter; wherein the notification message is a first eNB configuration transfer message and **characterised in that** the first eNB configuration transfer message comprises an X2 transport network layer configuration message, and the security parameter set lies in the X2 transport network layer configuration message.

2. The method according to claim 1 wherein the response message is a second eNB configuration transfer message.

3. A method for establishing an X2 security tunnel, comprising:
receiving (S310), by a base station, a notification message sent by a peer base station, wherein the notification message comprises a security parameter set;
selecting (S320) a security parameter value supported by the base station from the security parameter set; and
sending (S330) a response message to the peer base station, wherein the response message comprises the selected security parameter value,
wherein the method is **characterized in that**:
the security parameter set comprises an IP-Sec parameter set and an IKE parameter set;
the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and
the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter, wherein the notification message is a first eNB configuration transfer message and **characterised in that** the first eNB configuration transfer message comprises an X2 transport network layer configuration message, and the security parameter set lies in the X2 transport network layer configuration message.

4. The method according to claim 3 wherein the response message is a second eNB configuration transfer message.

5. A base station, comprising:
a storing module (410), configured to store a security parameter set;
an interface module (420), configured to send a notification message to a peer base station, wherein the notification message comprises the security parameter set, and further configured to receive a response message sent by the peer base station, wherein the response message comprises a security parameter value selected by the peer base station from the security parameter set; and
a tunnel establishing module (430), configured to establish an X2 security tunnel according to the response message,
wherein the base station is **characterized in that**:
the security parameter set comprises an IP-Sec parameter set and an IKE parameter set;
wherein IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter;
the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter; wherein the notification message is a first eNB configuration transfer message and **characterised in that** the first eNB configuration transfer message comprises an X2 transport network layer configuration message, and the security parameter set lies in the X2 transport network layer configuration message.

6. The base station according to claim 5, wherein the response message is a second eNB configuration transfer message.

7. A base station, comprising:
a storing module (620), configured to store a security parameter value supported by the base station;
an interface module (610), configured to receive a notification message sent by a peer base station, wherein the notification message comprises a security parameter set; and
a selecting module (630), configured to select a security parameter value supported by the base station from the security parameter set; and
the interface module (610) is further configured to send a response message to the peer base station, wherein the response message comprises the selected security parameter value,
wherein the base station is **characterized in that**:
the security parameter set comprises an IP-Sec parameter set and an IKE parameter set;
wherein the IKE parameter set comprises: IKE protocol version, IKE exchange modeIKE, IKE authentication mode, IKE encryption algorithm, IKE authentication algorithm, Diffie-Hellman group of the IKE, Pseudo-random Function, and algorithm used in IKEv2, and all values supported by each parameter; and
the IP-Sec parameter set comprises: IPSec negotiation perfect forward secrecy, Encapsulation mode of an IPSec, IPSec transform, AH Authentication Algorithm, ESP Authentication Algorithm, and ESP Encryption Algorithm, and all values supported by each parameter; wherein the notification message is a first eNB configuration transfer message and **characterised in that** the first eNB configuration transfer message comprises an X2 transport network layer configuration message, and the security parameter set lies in the X2 transport network layer configuration message.

8. The base station according to claim 7 wherein the response message is a second eNB configuration transfer message.

## Patentansprüche

1. Verfahren zum Einrichten eines X2-Sicherheitskanals, umfassend:
Senden (S210) einer Benachrichtigung durch eine Basisstation an eine Partnerbasisstation, wobei die Benachrichtigung einen Sicherheitsparametersatz umfasst;
Empfangen (S220) einer von der Partnerbasisstation gesendeten Antwortnachricht,
wobei die Antwortnachricht einen von der Partnerbasisstation aus dem Sicherheitsparametersatz ausgewählten Sicherheitsparameterwert umfasst; und
Einrichten (S230) eines X2-Sicherheitskanals in Übereinstimmung mit der Antwortnachricht,
wobei das Verfahren **dadurch gekennzeichnet ist, dass**:
der Sicherheitsparametersatz einen "IPsec"-Parametersatz und einen IKE-Parametersatz umfasst;
wobei der IKE-Parametersatz umfasst: IKE-Protokollversion, IKE-Austausch-modeIKE, IKE-Authentifizierungsmodus, IKE-Verschlüsselungsalgorithmus, IKE-Authentifizierungsalgorithmus, Diffie-Hellman-Gruppe von IKE,
Pseudozufallsfunktion und in IKEv2 verwendeter Algorithmus und alle Werte, die von jedem Parameter unterstützt werden, und
der "IPsec"-Parametersatz umfasst: "IPsec"-Verhandlungs-"Perfect-Forward-Secrecy", Kapselungsmodus von IPsec, IPsec-Transformation, AH-Authentifizierungsalgorithmus, ESP-Authentifizierungsalgorithmus und ESP-Verschlüsselungsalgorithmus und alle Werte, die von jedem Parameter unterstützt werden; wobei die Benachrichtigung eine erste eNB-Konfigurationstransfernachricht ist,
und **dadurch gekennzeichnet ist, dass** die erste eNB-Konfigurationstransfernachricht eine X2-Transportvermittlungsschicht-Konfigurationsnachricht umfasst und der Sicherheitsparametersatz in der X2-Transportvermittlungsschicht-Konfigurationsnachricht liegt.

2. Verfahren nach Anspruch 1, wobei die Antwortnachricht eine zweite eNB-Konfigurationstransfernachricht ist.

3. Verfahren zum Einrichten eines X2-Sicherheitskanals, umfassend:
Empfangen (S310) einer von einer Partnerbasisstation gesendeten Benachrichtigung durch eine Basisstation, wobei die Benachrichtigung einen Sicherheitsparametersatz umfasst;
Auswählen (S320) eines von der Basisstation unterstützten Sicherheitsparameterwerts aus dem Sicherheitsparametersatz; und
Senden (S330) einer Antwortnachricht an die Partnerbasisstation, wobei die Antwortnachricht den ausgewählten Sicherheitsparameterwert umfasst,
wobei das Verfahren **dadurch gekennzeichnet ist, dass**:
der Sicherheitsparametersatz einen "IPsec"-Parametersatz und einen IKE-Parametersatz umfasst;
der IKE-Parametersatz umfasst: IKE-Protokollversion, IKE-Austausch-modeIKE, IKE-Authentifizierungsmodus, IKE-Verschlüsselungsalgorithmus, IKE-Authentifizierungsalgorithmus, Diffie-Hellman-Gruppe von IKE, Pseudozufallsfunktion und in IKEv2 verwendeter Algorithmus und alle Werte, die von jedem Parameter unterstützt werden, und
der "IPsec"-Parametersatz umfasst: "IPsec"-Verhandlungs-"Perfect-Forward-Secrecy", Kapselungsmodus von IPsec, IPsec-Transformation, AH-Authentifizierungsalgorithmus, ESP-Authentifizierungsalgorithmus und ESP-Verschlüsselungsalgorithmus und alle Werte, die von jedem Parameter unterstützt werden; wobei die Benachrichtigung eine erste eNB-Konfigurationstransfernachricht ist,
und **dadurch gekennzeichnet ist, dass** die erste eNB-Konfigurationstransfernachricht eine X2-Transportvermittlungsschicht-Konfigurationsnachricht umfasst und der Sicherheitsparametersatz in der X2-Transportvermittlungsschicht-Konfigurationsnachricht liegt.

4. Verfahren nach Anspruch 3, wobei die Antwortnachricht eine zweite eNB-Konfigurationstransfernachricht ist.

5. Basisstation, umfassend:
ein Speichermodul (410), das konfiguriert ist, einen Sicherheitsparametersatz zu speichern;
ein Schnittstellenmodul (420), das konfiguriert ist, eine Benachrichtigung an eine Partnerbasisstation zu senden, wobei die Benachrichtigung den Sicherheitsparametersatz umfasst, und das ferner konfiguriert ist, eine von der Partnerbasisstation gesendete Antwortnachricht zu empfangen, wobei die Antwortnachricht einen von der Partnerbasisstation aus dem Sicherheitsparametersatz ausgewählten Sicherheitsparameterwert umfasst; und
ein Tunneleinrichtungsmodul (430), das konfiguriert ist, einen X2-Sicherheitskanal in Übereinstimmung mit der Antwortnachricht einzurichten,
wobei die Basisstation **dadurch gekennzeichnet ist, dass**:
der Sicherheitsparametersatz einen "IPsec"-Parametersatz und einen IKE-Parametersatz umfasst;
wobei der IKE-Parametersatz umfasst: IKE-Protokollversion, IKE-Austausch-modeIKE, IKE-Authentifizierungsmodus, IKE-Verschlüsselungsalgorithmus, IKE-Authentifizierungsalgorithmus, Diffie-Hellman-Gruppe von IKE, Pseudozufallsfunktion und in IKEv2 verwendeter Algorithmus und alle Werte, die von jedem Parameter unterstützt werden, und
der "IPsec"-Parametersatz umfasst: "IPsec"-Verhandlungs-"Perfect-Forward-Secrecy", Kapselungsmodus von IPsec, IPsec-Transformation, AH-Authentifizierungsalgorithmus, ESP-Authentifizierungsalgorithmus und ESP-Verschlüsselungsalgorithmus und alle Werte, die von jedem Parameter unterstützt werden; wobei die Benachrichtigung eine erste eNB-Konfigurationstransfernachricht ist,
und **dadurch gekennzeichnet ist, dass** die erste eNB-Konfigurationstransfernachricht eine X2-Transportvermittlungsschicht-Konfigurationsnachricht umfasst und der Sicherheitsparametersatz in der X2-Transportvermittlungsschicht-Konfigurationsnachricht liegt.

6. Basisstation nach Anspruch 5, wobei die Antwortnachricht eine zweite eNB-Konfigurationstransfernachricht ist.

7. Basisstation, umfassend:
ein Speichermodul (620), das konfiguriert ist, einen von der Basisstation unterstützten Sicherheitsparameterwert zu speichern;
ein Schnittstellenmodul (610), das konfiguriert ist, eine von einer Partnerbasisstation gesendete Benachrichtigung zu empfangen, wobei die Benachrichtigung einen Sicherheitsparametersatz umfasst; und
ein Auswahlmodul (630), das konfiguriert ist, einen von der Basisstation unterstützten Sicherheitsparameterwert aus dem Sicherheitsparametersatz auszuwählen; und
wobei das Schnittstellenmodul (610) ferner konfiguriert ist, eine Antwortnachricht an die Partnerbasisstation zu senden, wobei die Antwortnachricht den ausgewählten Sicherheitsparameterwert umfasst,
wobei die Basisstation **dadurch gekennzeichnet ist, dass**:
der Sicherheitsparametersatz einen "IPsec"-Parametersatz und einen IKE-Parametersatz umfasst;
wobei der IKE-Parametersatz umfasst: IKE-Protokollversion, IKE-Austausch-modeIKE, IKE-Authentifizierungsmodus, IKE-Verschlüsselungsalgorithmus, IKE-Authentifizierungsalgorithmus, Diffie-Hellman-Gruppe von IKE, Pseudozufallsfunktion und in IKEv2 verwendeter Algorithmus und alle Werte, die von jedem Parameter unterstützt werden, und
der "IPsec"-Parametersatz umfasst: "IPsec"-Verhandlungs-"Perfect-Forward-Secrecy", Kapselungsmodus von IPsec, IPsec-Transformation, AH-Authentifizierungsalgorithmus, ESP-Authentifizierungsalgorithmus und ESP-Verschlüsselungsalgorithmus und alle Werte, die von jedem Parameter unterstützt werden; wobei die Benachrichtigung eine erste eNB-Konfigurationstransfernachricht ist,
und **dadurch gekennzeichnet ist, dass** die erste eNB-Konfigurationstransfernachricht eine X2-Transportvermittlungsschicht-Konfigurationsnachricht umfasst und der Sicherheitsparametersatz in der X2-Transportvermittlungsschicht-Konfigurationsnachricht liegt.

8. Basisstation nach Anspruch 7, wobei die Antwortnachricht eine zweite eNB-Konfigurationstransfernachricht ist.

## Revendications

1. Procédé d'établissement d'un tunnel de sécurité X2, comprenant :
l'envoi (S210), par une station de base, d'un message de notification à une station de base homologue, le message de notification comprenant un ensemble de paramètres de sécurité ;
la réception (S220) d'un message de réponse envoyé par la station de base homologue, le message de réponse comprenant une valeur de paramètre de sécurité sélectionnée par la station de base homologue parmi l'ensemble de paramètres de sécurité ; et
l'établissement (S230) d'un tunnel de sécurité X2 conformément au message de réponse, le procédé étant **caractérisé en ce que** :
l'ensemble de paramètres de sécurité comprend un ensemble de paramètres IP-Sec et un ensemble de paramètres IKE ;
dans lequel l'ensemble de paramètres IKE comprend : la version de protocole IKE, le modeIKE d'échange IKE, le mode d'authentification IKE, l'algorithme de cryptage IKE, l'algorithme d'authentification IKE, le groupe Diffie-Hellman de l'IKE, une fonction pseudo-aléatoire, et l'algorithme utilisé dans IKEv2, et toutes les valeurs prises en charge par chaque paramètre ; et
l'ensemble de paramètres IP-Sec comprend : la clé de confidentialité de transmission parfaite de négociation IPSec, le mode d'encapsulation d'un IPSec, la transformée IPSec, l'algorithme d'authentification AH, l'algorithme d'authentification ESP, et l'algorithme de cryptage ESP, et toutes les valeurs prises en charge par chaque paramètre ; dans lequel le message de notification est un premier message de transfert de configuration d'eNB,
et **caractérisé en ce que** le premier message de transfert de configuration d'eNB comprend un message de configuration de couche réseau de transport X2, et l'ensemble de paramètres de sécurité est contenu dans le message de configuration de couche réseau de transport X2.

2. Procédé selon la revendication 1, dans lequel le message de réponse est un second message de transfert de configuration d'eNB.

3. Procédé d'établissement d'un tunnel de sécurité X2, comprenant :
la réception (S310), par une station de base, d'un message de notification envoyé par une station de base homologue, le message de notification comprenant un ensemble de paramètres de sécurité ;
la sélection (S320) d'une valeur de paramètre de sécurité prise en charge par la station de base parmi l'ensemble de paramètres de sécurité ; et
l'envoi (S330) d'un message de réponse à la station de base homologue, le message de réponse comprenant la valeur de paramètre de sécurité sélectionnée,
le procédé étant **caractérisé en ce que** :
l'ensemble de paramètres de sécurité comprend un ensemble de paramètres IP-Sec et un ensemble de paramètres IKE ;
l'ensemble de paramètres IKE comprend : la version de protocole IKE, le modeIKE d'échange IKE, le mode d'authentification IKE, l'algorithme de cryptage IKE,
l'algorithme d'authentification IKE, le groupe Diffie-Hellman de l'IKE, une fonction pseudo-aléatoire, et l'algorithme utilisé dans IKEv2, et toutes les valeurs prises en charge par chaque paramètre ; et
l'ensemble de paramètres IP-Sec comprend: la clé de confidentialité de transmission parfaite de négociation IPSec, le mode d'encapsulation d'un IPSec, la transformée IPSec, l'algorithme d'authentification AH, l'algorithme d'authentification ESP, et l'algorithme de cryptage ESP, et toutes les valeurs prises en charge par chaque paramètre, dans lequel le message de notification est un premier message de transfert de configuration d'eNB,
et **caractérisé en ce que** le premier message de transfert de configuration d'eNB comprend un message de configuration de couche réseau de transport X2, et l'ensemble de paramètres de sécurité est compris dans le message de configuration de couche réseau de transport X2.

4. Procédé selon la revendication 3, dans lequel le message de réponse est un second message de transfert de configuration d'eNB.

5. Station de base, comprenant :
un module de mémorisation (410), configuré pour mémoriser un ensemble de paramètres de sécurité ;
un module d'interface (420), configuré pour envoyer un message de notification à une station de base homologue, le message de notification comprenant l'ensemble de paramètres de sécurité, et configuré en outre pour recevoir un message de réponse envoyé par la station de base homologue, le message de réponse comprenant une valeur de paramètre de sécurité sélectionnée par la station de base homologue parmi l'ensemble de paramètres de sécurité ; et
un module d'établissement de tunnel (430), configuré pour établir un tunnel de sécurité X2 conformément au message de réponse,
la station de base étant **caractérisée en ce que** :
l'ensemble de paramètres de sécurité comprend un ensemble de paramètres IP-Sec et un ensemble de paramètres IKE ;
dans laquelle l'ensemble de paramètres IKE comprend : la version de protocole IKE, le modeIKE d'échange IKE, le mode d'authentification IKE, l'algorithme de cryptage IKE, l'algorithme d'authentification IKE, le groupe Diffie-Hellman de l'IKE, une fonction pseudo-aléatoire, et l'algorithme utilisé dans IKEv2, et toutes les valeurs prises en charge par chaque paramètre;
l'ensemble de paramètres IP-Sec comprend : la clé de confidentialité de transmission parfaite de négociation IPSec, le mode d'encapsulation d'un IPSec, la transformée IPSec, l'algorithme d'authentification AH, l'algorithme d'authentification ESP, et
l'algorithme de cryptage ESP, et toutes les valeurs prises en charge par chaque paramètre ; dans laquelle le message de notification est un premier message de transfert de configuration d'eNB ;
et **caractérisée en ce que** le premier message de transfert de configuration d'eNB comprend un message de configuration de couche réseau de transport X2, et l'ensemble de paramètres de sécurité est compris dans le message de configuration de couche réseau de transport X2.

6. Station de base selon la revendication 5, dans laquelle le message de réponse est un second message de transfert de configuration d'eNB.

7. Station de base, comprenant :
un module de mémorisation (620), configuré pour mémoriser une valeur de paramètre de sécurité prise en charge par la station de base ;
un module d'interface (610), configuré pour recevoir un message de notification envoyé par une station de base homologue, le message de notification comprenant un ensemble de paramètres de sécurité ; et
un module de sélection (630), configuré pour sélectionner une valeur de paramètre de sécurité prise en charge par la station de base parmi l'ensemble de paramètres de sécurité ; et
le module d'interface (610) est configuré en outre pour envoyer un message de réponse à la station de base homologue, le message de réponse comprenant la valeur de paramètre de sécurité sélectionnée,
la station de base étant **caractérisée en ce que** :
l'ensemble de paramètres de sécurité comprend un ensemble de paramètres IP-Sec et un ensemble de paramètres IKE ;
dans laquelle l'ensemble de paramètres IKE comprend : la version de protocole IKE, le modeIKE d'échange IKE, le mode d'authentification IKE, l'algorithme de cryptage IKE, l'algorithme d'authentification IKE, le groupe Diffie-Hellman de l'IKE, une fonction pseudo-aléatoire, et l'algorithme utilisé dans IKEv2, et toutes les valeurs prises en charge par chaque paramètre ; et
l'ensemble de paramètres IP-Sec comprend : la clé de confidentialité de transmission parfaite de négociation IPSec, le mode d'encapsulation d'un IPSec, la transformée IPSec, l'algorithme d'authentification AH, l'algorithme d'authentification ESP, et
l'algorithme de cryptage ESP, et toutes les valeurs prises en charge par chaque paramètre ; dans laquelle le message de notification est un premier message de transfert de configuration d'eNB,
et **caractérisée en ce que** le premier message de transfert de configuration d'eNB comprend un message de configuration de couche réseau de transport X2, et l'ensemble de paramètres de sécurité est compris dans le message de configuration de couche réseau de transport X2.

8. Station de base selon la revendication 7, dans lequel le message de réponse est un second message de transfert de configuration d'eNB.
